# EUROPEAN PATENT SPECIFICATION

(11) **EP 3 411 783 B1**
(45) Date of publication and mention of the grant of the patent: **20.12.2023**
(21) Application number: 17766882.9
(22) Date of filing: 01.02.2017
(51) Int. Cl.: G06F 3/0481, G06F 3/04845, G06F 3/04883

(54) **ELECTRONIC DEVICE AND METHOD FOR CONTROLLING THE SAME**
ELEKTRONISCHE VORRICHTUNG UND VERFAHREN ZUR STEUERUNG DAVON
DISPOSITIF ÉLECTRONIQUE ET SON PROCÉDÉ DE COMMANDE

(30) Priority: 18.03.2016 KR 20160032782
(43) Date of publication of application: 12.12.2018
(73) Proprietor: Samsung Electronics Co., Ltd., Suwon-si, Gyeonggi-do 16677 (KR)
(72) Inventor: CHOI, Woongyeob, Seoul 07755 (KR); CHOI, Jongho, Suwon-si Gyeonggi-do 16712 (KR); CHOI, Hyemin, Yongin-si Gyeonggi-do 16944 (KR)
(74) Representative: Jacobs, Bart
(86) International application number: PCT/KR2017/001059
(87) International publication number: WO 2017/159981

(56) References cited:
- US-A1- 2011 187 662
- US-A1- 2013 219 340
- US-A1- 2014 160 073
- US-A1- 2014 218 387
- US-A1- 2014 245 223
- US-A1- 2015 153 951
- US-A1- 2015 169 141
- US-A1- 2015 324 087

## Description

### Technical Field

The present disclosure relates to an electronic device having a large-screen display and a method for controlling content displayed on the display in response to a user's touch input.

### Background Art

Recently a great variety of electronic devices such as a smart phone, a tablet personal computer (PC) and a wearable device have been increasingly popularized. Through such electronic devices, users may experience various multimedia contents.

In order to easily view multimedia contents, users prefer electronic devices having a large-screen display. Even though lowering portability of electronic devices, the large-screen display is advantageous for providing highly readable contents to users. Also, the large-screen display allows a user to simply manipulate displayed content by means of touch-based input actions such as scroll.

Normally a user grasps an electronic device with both hands so as to stably view content. In this case, the user may often detach one hand from the electronic device so as to, for example, select a displayed icon. This may, however, cause an undesirable movement of the electronic device, and the user may have difficulty in exactly touching a desired position. Further, in case of selecting some hard keys, the user may be required to detach both hands from the electronic device.

US 2014/245223 A1 describes a method for controlling the display of an object on the touch screen of a mobile terminal by generating a zoom window.

US 2015/169141 A1 describes a method for controlling a screen of an electronic device by dividing a screen in a plurality of sub-screens and displaying a selected sub-screen in a mirroring region.

US 2015/153951 A1 describes a method for operating virtual touch pad for a portable electronic device.

### Disclosure of Invention

### Technical Problem

Accordingly, there is a need for an electronic device and control method thereof which allow a user to easily select a distant icon or hard key while still holding the electronic device with both hands.

The above information is presented as background information only to assist with an understanding of the present disclosure. No determination has been made, and no assertion is made, as to whether any of the above might be applicable as prior art with regard to the present disclosure.

Aspects of the present disclosure are to address at least the above-mentioned problems and/or disadvantages and to provide at least the advantages described below. Accordingly, an aspect of the present disclosure is to provide an electronic device having a large-screen display and a method for controlling content displayed on the display in response to a user's touch input.

### Solution to Problem

In accordance with an aspect of the present disclosure, an electronic device is provided. The electronic device includes a display configured to receive a user's touch input, and at least one processor electrically connected to the display. The at least one processor may be configured to display, on the display in response to a first input, a first user interface (UI) component for distinguishing at least part of an entire display area of the display from the entire display area, and a second UI component for displaying a specific image of an area where the first UI component is located. A location of the second UI component displayed on the display may be determined based on a location of the first input.

In accordance with another aspect of the present disclosure, an electronic device is provided. The electronic device includes first and second displays configured to receive a user's touch input, and at least one processor electrically connected to the first and second displays. The at least one processor is configured to, in response to a first input received from the second display, display on the first display a first UI component for distinguishing at least part of an entire display area of the first display from the entire display area, and display on the second display a second UI component for displaying a specific image of an area where the first UI component is located. A location of the second UI component displayed on the second display may be determined based on a location of the first input.

In accordance with another aspect of the present disclosure, a control method of an electronic device having a display is provided. The control method includes receiving a first input, receiving information about a location of the first input, displaying, on the display in response to the first input, a first UI component for distinguishing at least part of an entire display area of the display from the entire display area, and a second UI component for displaying a specific image of an area where the first UI component is located, and determining a location of the second UI component displayed on the display, based on a location of the first input.

In accordance with another aspect of the present disclosure, a non-transitory computer-readable recording medium is provided. The recording medium has, recorded thereon, a program executing a control method of an electronic device having a display is provided. The method includes receiving a first input, receiving information about a location of the first input, displaying, on the display in response to the first input, a first UI component for distinguishing at least part of an entire display area of the display from the entire display area, and a second UI component for displaying a specific image of an area where the first UI component is located, and determining a location of the second UI component displayed on the display, based on a location of the first input.

### Advantageous Effects of Invention

According to various embodiments of the present disclosure, a user who desires to use a certain function can easily select a corresponding icon, even though being distant from a grasped place, without detaching any grasping hand from the electronic device. Namely, although a desired icon is disposed in the first UI component which is hard for the user to select in a grasping state, the user may easily select the icon through the second UI component.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

The above and other aspects, features, and advantages of certain embodiments of the present disclosure will be more apparent from the following description taken in conjunction with the accompanying drawings, in which:
FIG. 1 is a block diagram illustrating a network environment including an electronic device according to an embodiment of the present disclosure;
FIG. 2 is a block diagram illustrating an electronic device according to an embodiment of the present disclosure;
FIG. 3 is a block diagram illustrating a program module according to an embodiment of the present disclosure;
FIG. 4 is a diagram illustrating first and second user interface (UI) components displayed on an electronic device according to an embodiment of the present disclosure;
FIG. 5 is a schematic block diagram illustrating an electronic device according to an embodiment of the present disclosure;
FIG. 6 is a flow diagram illustrating a process of displaying first and second UI components at an electronic device according to an embodiment of the present disclosure;
FIGS. 7A and 7B are diagrams illustrating a situation in which a second UI component is created, based on a location of a first input, at an electronic device according to various embodiments of the present disclosure;
FIGS. 8A and 8B are diagrams illustrating a situation in which a first UI component is created, based on a location of a first input, at an electronic device according to various embodiments of the present disclosure;
FIGS. 9A and 9B are diagrams illustrating a situation in which a predetermined function is performed in response to a touch on an inner area of a second UI component at an electronic device according to various embodiments of the present disclosure;
FIG. 10 is a flow diagram illustrating a process of moving a first UI component in response to a second input on an inner area of a second UI component at an electronic device according to an embodiment of the present disclosure;
FIGS. 11A and 11B are diagrams illustrating a situation in which a first UI component is transferred in response to a second input on an inner area of a second UI component at an electronic device according to various embodiments of the present disclosure;
FIGS. 12A and 12B are diagrams illustrating a situation in which a first UI component is transferred to and located at the end of a display at an electronic device according to various embodiments of the present disclosure;
FIG. 13 is a flow diagram illustrating a process of transferring content displayed on a display in response to a second input on an inner area of a second UI component at an electronic device according to an embodiment of the present disclosure;
FIGS. 14A and 14B are diagrams illustrating a situation in which content displayed on a display is transferred in response to a second input on an inner area of a second UI component at an electronic device according to various embodiments of the present disclosure;
FIGS. 15A and 15B are diagrams illustrating a situation in which a first UI component is not transferred when content displayed on a display is transferred in response to a second input on an inner area of a second UI component at an electronic device according to various embodiments of the present disclosure;
FIGS. 16A and 16B are diagrams illustrating a situation in which a third UI component is created in response to a third input at an electronic device according to various embodiments of the present disclosure;
FIGS. 17A and 17B are diagrams illustrating a situation in which first and second UI components disappear in response to a fourth input at an electronic device according to various embodiments of the present disclosure; and
FIGS. 18A and 18B are diagrams illustrating a situation in which first and second UI components are created, based on a location of a first input, at an electronic device having a plurality of displays according to various embodiments of the present disclosure.

Throughout the drawings, it should be noted that like reference numbers are used to depict the same or similar elements, features, and structures.

### Mode for the Invention

The following description with reference to the accompanying drawings is provided to assist in a comprehensive understanding of various embodiments of the present disclosure as defined by the claims. It concludes various specific details to assist in that understanding, but these are to be regarded as merely exemplary. Accordingly, those of ordinary skill in the art will recognize that various changes and modification of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, operation, constituent element, component or a combination thereof, but may not be construed to exclude the existence of or a possibility of the addition of one or more other characteristics, numbers, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device may indicate different user devices although both of them are user devices. Similarly, without departing from the scope of the present disclosure, a first structural element may be referred to as a second structural element. The second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet personal computer (PC), a mobile phone, a video phone, an e-book reader, a desktop PC, a laptop PC, a netbook computer, a personal digital assistant (PDA), a camera, and a wearable device (e.g., a head-mounted-device (HMD) such as electronic glasses, electronic clothes, an electronic bracelet, an electronic necklace, an electronic accessary, an electronic tattoo, and a smart watch).

According to some embodiments of the present disclosure, the electronic device may be a smart home appliance having a communication function. The smart home appliance may include at least one of a television (TV), a digital versatile disc (DVD) player, an audio player, an air conditioner, a cleaner, an oven, a microwave oven, a washing machine, an air cleaner, a set-top box, a TV box (e.g., Samsung HomeSync^{™}, Apple TV^{™}, or Google TV^{™}), game consoles, an electronic dictionary, an electronic key, a camcorder, and an electronic frame.

According to some embodiments, the electronic device may include at least one of various types of medical devices (e.g., magnetic resonance angiography (MRA), magnetic resonance imaging (MRI), computed tomography (CT), a scanner, an ultrasonic device and the like), a navigation device, a global navigation satellite system (GNSS) receiver, an event data recorder (EDR), a flight data recorder (FDR), a vehicle infotainment device, electronic equipment for a ship (e.g., a navigation device for ship, a gyro compass and the like), avionics, a security device, a head unit for a vehicle, an industrial or home robot, an automatic teller machine (ATM) of financial institutions, a point of sale (POS) device of shops, and a device for internet of things (IoT) (e.g., a fire alarm, various sensors, electric or gas meter units, a sprinkler, a thermostat, a streetlamp, a toaster, sport outfits, a hot-water tank, a heater, a boiler and the like).

According to some embodiments of the present disclosure, the electronic device may include at least one of furniture or a part of a building/structure, an electronic board, an electronic signature receiving device, a projector, and various types of measuring devices (e.g., a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (e.g., an artificial intelligence electronic device) which uses an electronic device.

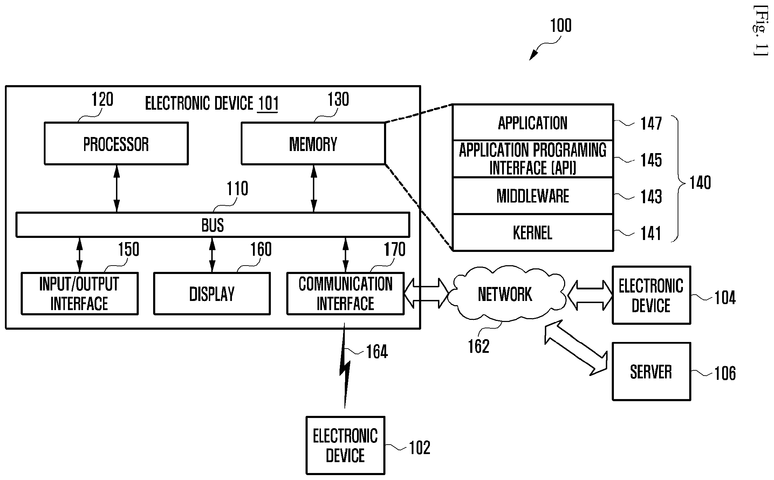

FIG. 1 illustrates a network environment 100 including an electronic device 101 according to various embodiments of the present disclosure.

Referring to FIG. 1, the electronic device 101 may include various components including a bus 110, a processor 120, a memory 130, an input/output interface 150, a display 160, and a communication interface 170.

The bus 110 may be a circuit connecting the above described components and transmitting communication (e.g., a control message) between the above described components.

The processor 120 may receive commands from other components (e.g., the memory 130, the input/output interface 150, the display 160, or the communication interface 170) through the bus 110, analyze the received commands, and execute calculation or data processing according to the analyzed commands.

The memory 130 stores commands or data received from the processor 120 or other components (e.g., the input/output interface 150, the display 160, or the communication interface 170) or generated by the processor 120 or other components. The memory 130 may store a software and/or a program 140. For example, the program 140 may include a kernel 141, middleware 143, an application programming interface (API) 145, and an application program (or an application) 147. At least part of the kernel 141, the middleware 143 or the API 145 may refer to an operating system (OS).

The kernel 141 controls or manages system resources (e.g., the bus 110, the processor 120, or the memory 130) used for executing an operation or function implemented by the remaining other programming modules, for example, the middleware 143, the API 145, or the application 147. The kernel 141 provides an interface for accessing individual components of the electronic device 101 from the middleware 143, the API 145, or the application 147 to control or manage the components.

The middleware 143 performs a relay function of allowing the API 145 or the application 147 to communicate with the kernel 141 to exchange data. In operation requests received from the application 147, the middleware 143 performs a control for the operation requests (e.g., scheduling or load balancing) by using a method of assigning a priority, by which system resources (e.g., the bus 110, the processor 120, the memory 130 and the like) of the electronic device 101 can be used, to the application 147.

The API 145 is an interface by which the application 147 can control a function provided by the kernel 141 or the middleware 143 and includes, for example, at least one interface or function (e.g., command) for a file control, a window control, image processing, or a character control.

The application 147 may include a short message service (SMS)/multimedia messaging service (MMS) application, an email application, a calendar application, an alarm application, a health care application (e.g., application measuring quantity of exercise or blood sugar) or an environment information application (e.g., application providing information on barometric pressure, humidity or temperature). The application 147 may be an application related to an information exchange between the electronic device 101 and an external electronic device (e.g., electronic device 104). The application 147 related to the information exchange may include, for example, a notification relay application for transferring particular information to the external electronic device or a device management application for managing the external electronic device.

For example, the notification relay application may include a function of transmitting notification information generated by another application (e.g., an SMS/MMS application, an email application, a health care application or an environment information application) of the electronic device 101 to the external electronic device (e.g., electronic device 104). The notification relay application may receive notification information from, for example, the external electronic device 104, and provide the received notification information to the user. The device management application may manage (e.g., install, remove, or update) at least a part of functions of the electronic device. For example, the device management application may turn on/off the external electronic device (or some components of the external electronic device), control a brightness of the display of the external electronic device or communicate with the electronic device 101, an application executed in the external electronic device 104, or a service (e.g., call service or message service) provided by the external electronic device 104.

The application 147 may include an application designated according to an attribute (e.g., type of electronic device) of the external electronic device 104. For example, when the external electronic device 104 is a Moving Picture Experts Group (MPEG-1 or MPEG-2) audio layer-3 (MP3) player, the application 147 may include an application related to music reproduction. Similarly, when the external electronic device 104 is a mobile medical device, the application 147 may include an application related to health care. The application 147 may include at least one of an application designated to the electronic device 101 and an application received from an external electronic device (e.g., server 106 or electronic device 104).

The input/output interface 150 transmits a command or data input from the user through an input/output device 140 (e.g., a sensor, a keyboard, or a touch screen) to the processor 120, the memory 130, the communication interface 170, or the display control module 150 through, for example, the bus 110. For example, the input/output interface 150 may provide data on a user's touch input through a touch screen to the processor 120. Further, the input/output interface 150 may output a command or data received through, for example, the bus 110, from the processor 120, the memory 130, or the communication interface 170 through the input/output device (e.g., a speaker or a display). For example, the input/output interface 150 may output voice data processed through the processor 120 to the user through the speaker.

The display 160 may include, for example, liquid crystal display (LCD), flexible display, transparent display, light-emitting diode (LED) display, organic LED (OLED) display, microelectromechanical systems (MEMS) display, or electronic paper display. The display 160 may visually offer, for example, various content (e.g., text, image, video, icon, symbol, etc.) to users. The display 160 may include a touch screen and receive, for example, a touch, gesture, proximity, or hovering input using an electronic pen or a user's body. The display 160 may be one or more displays. For example, the display 160 may be included in the electronic device 101 or included in an external device (e.g., the electronic device 102 or 104) having a wired or wireless connection with the electronic device 101, thus outputting information offered by the electronic device 101 to users.

The display 160 may be attachable to or detachable from the electronic device 101. For example, the display 160 may include an interface which can be mechanically or physically connected with the electronic device 101. In case the display 160 is detached (e.g., separated) from the electronic device 101 by a user's selection, the display 160 may receive various control signals or image data from the processor 120, e.g., through wireless communication.

The communication interface 170 may establish communication between the electronic device 101 and any external device (e.g., the first external electronic device 102, the second external electronic device 104, or the server 106). For example, the communication interface 170 may be connected with a network 162 through wired or wireless communication and thereby communicate with any external device (e.g., the first external electronic device 102, the second external electronic device 104, or the server 106).

The electronic device 101 may be connected with the first external electronic device 102 and the second external electronic device 104 without using the communication interface 170. For example, based on at least one of a magnetic sensor, a contact sensor, a light sensor, and the like that is equipped in the electronic device 101, the electronic device 101 may sense whether at least one of the first and second external electronic devices 102 and 104 is contacted with at least part of the electronic device 101, or whether at least one of the first and second external electronic device 102 and 104, respectively, is attached to at least part of the electronic device 101.

Wireless communication may use, as cellular communication protocol, at least one of long-term evolution (LTE), LTE-advance (LTE-A), code division multiple access (CDMA), wideband CDMA (WCDMA), universal mobile telecommunications system (UMTS), wireless broadband (WiBro), global system for mobile communications (GSM), and the like. A short-range communication 163 may include, for example, at least one of Wi-Fi, Bluetooth (BT), near field communication (NFC), magnetic secure transmission or near field magnetic data stripe transmission (MST), and GNSS, and the like. The GNSS may include at least one of, for example, a global positioning system (GPS), a Glonass, a Beidou navigation satellite system (hereinafter, referred to as "Beidou"), and European global satellite-based navigation system (Galileo). Hereinafter, the "GPS" may be interchangeably used with the "GNSS" in the present disclosure. Wired communication may include, for example, at least one of universal serial bus (USB), high definition multimedia interface (HDMI), recommended standard-232 (RS-232), plain old telephone service (POTS), and the like. The network 162 may include telecommunication network, for example, at least one of a computer network (e.g., local area network (LAN) or wide area network (WAN)), internet, and a telephone network.

The first and second external electronic devices 102 and 104 may be identical to, or different from, the electronic device 101. The first and second external electronic devices 102 and 104 may include, for example, a plurality of electronic devices. The server 106 may include a single server or a group of servers. All or part of operations executed in the electronic device 101 may be executed in other electronic device(s), such as the first and second electronic devices 102 and 104 or the server 106.

In case the electronic device 101 is required to perform a certain function or service automatically or by request, the electronic device 101 may request another device (e.g., the electronic device 102 or 104 or the server 106) to execute instead, or additionally at least part, of at least one or more functions associated with the required function or service. The requested device may execute the requested function and deliver the result of execution to the electronic device 101. Then, the electronic device 101 may offer the required function or service, based on the received result or by processing the received result. For the above, cloud computing technology, distributed computing technology, or client-server computing technology may be used, for example.

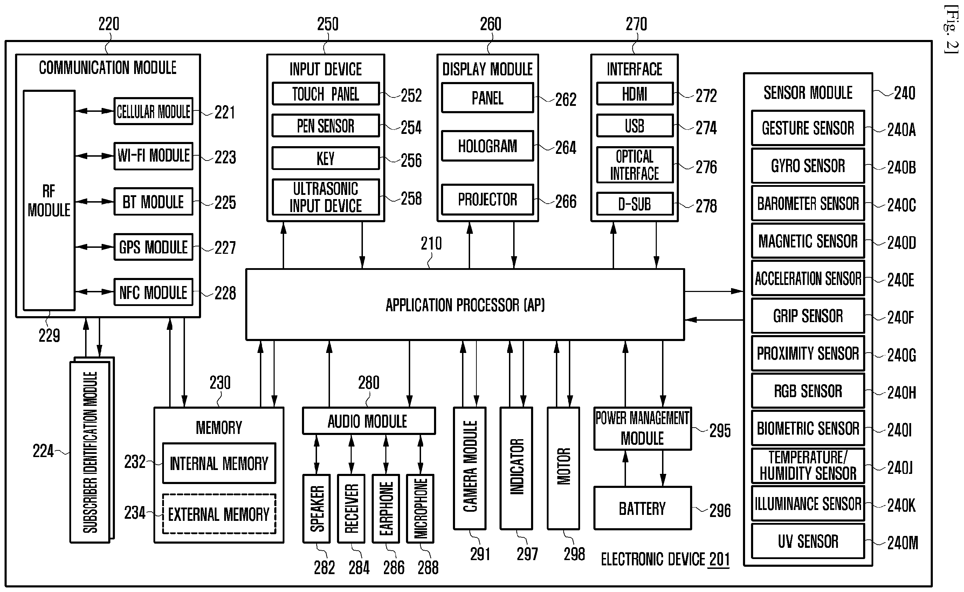

FIG. 2 is a detailed block diagram showing a configuration of an electronic device according to an embodiment of the present disclosure.

Referring to FIG. 2, for example, the electronic device 201 is capable of including part or all of the components in the electronic device 101 shown in FIG. 1. The electronic device 201 is capable of including one or more processors 210 (e.g., application processors (APs)), a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298.

The processor 210 is capable of driving, for example, an OS or an application program to control a plurality of hardware or software components connected to the processor 210, processing various data, and performing operations. The processor 210 may be implemented as, for example, a system on chip (SoC). The processor 210 may further include a graphic processing unit (GPU) and/or an image signal processor (ISP). The processor 210 may also include at least part of the components shown in FIG. 2, e.g., a cellular module 221. The processor 210 is capable of loading commands or data received from at least one of other components (e.g., a non-volatile memory) on a volatile memory, processing the loaded commands or data. The processor 210 is capable of storing various data in a non-volatile memory.

The communication module 220 may include the same or similar configurations as the communication interface 170 shown in FIG. 1. For example, the communication module 220 is capable of including a cellular module 221, WiFi module 223, BT module 225, GNSS module 227 (e.g., a GPS module, Glonass module, Beidou module or Galileo module), NFC module 228, and radio frequency (RF) module 229.

The cellular module 221 is capable of providing a voice call, a video call, an SMS service, an Internet service, etc., through a communication network, for example. The cellular module 221 is capable of identifying and authenticating an electronic device 201 in a communication network by using a SIM 224 (e.g., a SIM card). The cellular module 221 may be capable of performing at least part of the functions provided by the processor 210. The cellular module 221 may also include a communication processor (CP).

Each of the WiFi module 223, the BT module 225, the GNSS module 227, and the NFC module 228 may include a processor for processing data transmitted or received through the corresponding module. The MST module may include a processor for processing data transmitted or received through the corresponding module. At least part of the cellular module 221, WiFi module 223, BT module 225, GNSS module 227, NFC module 228, and MST module (e.g., two or more modules) may be included in one integrated chip (IC) or one IC package.

The RF module 229 is capable of transmission/reception of communication signals, e.g., RF signals. The RF module 229 may include a transceiver, a power amp module (PAM), a frequency filter, a low noise amplifier (LNA), an antenna, etc. According to another embodiment of the present disclosure, at least one of the following modules: cellular module 221, WiFi module 223, BT module 225, GNSS module 226, NFC module 227, and MST module is capable of transmission/reception of RF signals through a separate RF module.

The SIM module 224 may include a card including a SIM and/or an embodied SIM. The SIM module 224 may also contain unique identification information, e.g., integrated circuit card identifier (ICCID), or subscriber information, e.g., international mobile subscriber identity (IMSI).

The memory 230 (e.g., memory 130 shown in FIG. 1) may include a built-in memory 232 or an external memory 234. The built-in memory 232 may include at least one of the following: a volatile memory, e.g., a dynamic random access memory (DRAM), a static RAM (SRAM), a synchronous dynamic RAM (SDRAM), etc., and a non-volatile memory, e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, an NOR flash memory, etc.), a hard drive, a solid state drive (SSD), etc.

The external memory 234 may include a flash drive, e.g., a compact flash (CF), a secure digital (SD), a micro-SD, a mini-SD, an extreme digital (xD), a multi-media card (MMC), a memory stick, etc. The external memory 234 may be connected to the electronic device 201, functionally and/or physically, through various interfaces.

The memory 230 may store payment information and a payment application serving as one of the application programs. The payment information may refer to credit card numbers and PINs, corresponding to a credit card. The payment information may also include user authentication information, e.g., fingerprints, facial features, voice information, etc.

When the payment application is executed by the processor 210, the payment application may enable the processor 210 to perform: an interaction with the user to make payment (e.g., displaying a screen to select a card (or a card image) and obtaining information (e.g., a card number) corresponding to a selected card (e.g., a pre-specified card) from payment information), and an operation to control magnetic field communication (e.g., transmitting the card information to an external device (e.g., a card reading apparatus) through the NFC module 227 or MST module). The following description provides detailed embodiments with operations of the components described above.

The sensor module 240 may measure/detect a physical quantity or an operation state of the electronic device 201, and convert the measured or detected information into an electronic signal. The sensor module 240 may include at least one of the following: a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red, green, and blue (RGB) sensor), a biometric sensor 2401, a temperature/humidity sensor 240J, an illuminance sensor 240K, and a ultraviolet (UV) sensor 240M. Additionally or alternatively, the sensor module 240 may also include an E-nose sensor, an electromyography (EMG) sensor, an electroencephalogram (EEG) sensor, an electrocardiogram (ECG) sensor, an infrared (IR) sensor, an iris sensor and/or a fingerprint sensor. The sensor module 240 may further include a control circuit for controlling one or more sensors included therein. The electronic device 201 may include a processor, configured as part of the processor 210 or a separate component, for controlling the sensor module 240. In this case, while the processor 210 is operating in sleep mode, the processor may control the sensor module 240.

The input unit 250 may include, for example, a touch panel 252, a digital pen sensor 254, a key 256, or an ultrasonic input unit 258. The touch panel 252 may use, for example, at least one of a capacitive type, a resistive type, an infrared type, and an ultrasonic type. The touch panel 252 may further include a control circuit. The touch panel 252 may further include a tactile layer to offer a tactile feedback to a user. The touch panel 252 may include a pressure sensor (or a force sensor) capable of measuring the strength or pressure of a user's touch. This pressure sensor may be formed integrally with or separately from the touch panel 252.

The digital pen sensor 254 may be a part of the touch panel or include a separate sheet for recognition. The key 256 may include, for example, a physical button, an optical key, or a keypad. The ultrasonic input unit 258 may detect ultrasonic waves occurring at an input tool through a microphone (e.g., 288) and thereby identify data corresponding to the detected ultrasonic waves.

The display 260 may include a panel 262, a hologram unit 264, or a projector 266. The panel 262 may include the same or similar configurations as the display 160 shown in FIG. 1. The panel 262 may be implemented to be flexible, transparent, or wearable. The panel 262 may also be incorporated into one module together with the touch panel 252. The hologram unit 264 may show a stereoscopic image in the air by using light interference. The projector 266 may display an image by projecting light onto a screen. The screen may be located inside or outside of the electronic device 201. The display 260 may further include a control circuit for controlling the panel 262, the hologram unit 264, or the projector 266.

The interface 270 may include a high-definition multimedia interface (HDMI) 272, a USB 274, an optical interface 276, or a D-subminiature (D-sub) 278. The interface 270 may be included in the communication interface 170 shown in FIG. 1. Additionally or alternatively, the interface 270 may include a mobile high-definition link (MHL) interface, a SD card/ MMC interface, or an infrared data association (IrDA) standard interface.

The audio module 280 may provide bidirectional conversion between a sound and an electronic signal. At least part of the components in the audio module 280 may be included in the input/output interface 150 shown in FIG. 1. The audio module 280 may process sound information input or output through a speaker 282, a receiver 284, earphones 286, microphone 288, etc.

The camera module 291 may take both still and moving images. The camera module 291 may include one or more image sensors (e.g., a front image sensor or a rear image sensor), a lens, an ISP, a flash (e.g., an LED or xenon lamp), etc.

The power management module 295 is capable of managing power of the electronic device 201. The power management module 295 may include a power management integrated circuit (PMIC), a charger IC, or a battery or fuel gauge. The PMIC may employ wired charging and/or wireless charging methods. Examples of the wireless charging method are magnetic resonance charging, magnetic induction charging, and electromagnetic charging. To this end, the PIMC may further include an additional circuit for wireless charging, such as a coil loop, a resonance circuit, a rectifier, etc. The battery gauge may measure the residual capacity, charge in voltage, current, or temperature of the battery 296. The battery 296 takes the form of either a rechargeable battery or a solar battery.

The indicator 297 may display a specific status of the electronic device 201 or a part thereof (e.g., the processor 210), e.g., a boot-up status, a message status, a charging status, etc. The motor 298 may convert an electrical signal into mechanical vibrations, such as, a vibration effect, a haptic effect, etc. Although not shown, the electronic device 201 may further include a processing unit (e.g., GPU) for supporting a mobile TV. The processing unit for supporting a mobile TV is capable of processing media data pursuant to standards, e.g., digital multimedia broadcasting (DMB), digital video broadcasting (DVB), or mediaFlo^{™}, etc.

Each of the elements described in the present disclosure may be formed with one or more components, and the names of the corresponding elements may vary according to the type of the electronic device. In various embodiments, the electronic device may include at least one of the above described elements described in the present disclosure, and may exclude some of the elements or further include other additional elements. Further, some of the elements of the electronic device according to various embodiments may be coupled to form a single entity while performing the same functions as those of the corresponding elements before the coupling.

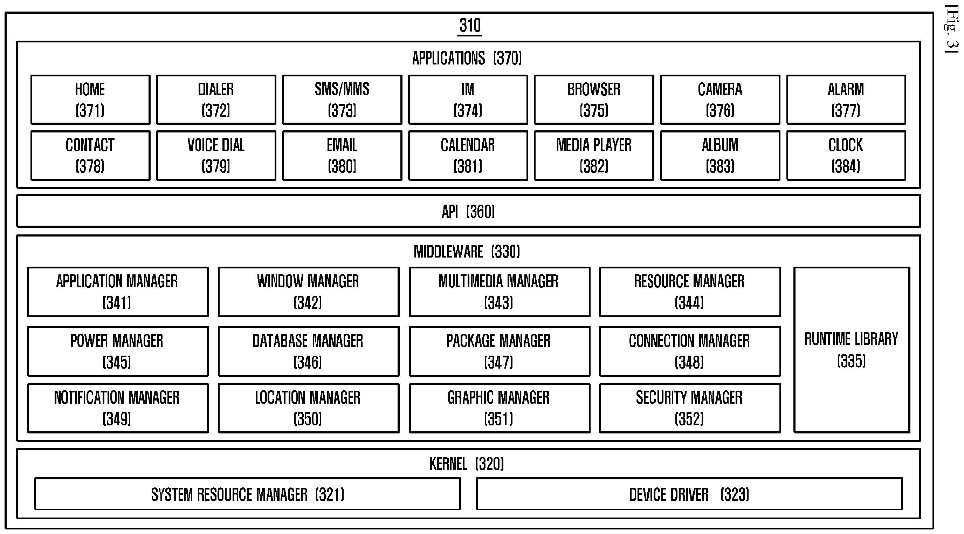

FIG. 3 is a block diagram of a programming module according to an embodiment of the present disclosure.

Referring to FIG. 3, the program module 310 (e.g., programs 141-147 shown in FIG. 1) may include an operating system (OS) for controlling resources related to the electronic device (e.g., electronic device 11) and/or various applications (e.g., application programs 147 shown in FIG. 1) running on the OS. The OS may be Android, iOS, Windows, Symbian, Tizen, Bada, etc.

The program module 310 may include a kernel 320, middleware 330, API 360 and/or applications 370. At least part of the program module 310 may be preloaded on the electronic device or downloaded from a server (e.g., an electronic device 102 or 104, server 106, etc.).

The kernel 320 (for example, kernel 14A) may include a system resource manager 321 and/or a device driver 323. The system resource manager 321 may include, for example, a process manager, a memory manager, and a file system manager. The system resource manager 321 may perform a system resource control, allocation, and recall. The device driver 323 may include, for example, a display driver, a camera driver, a BT driver, a shared memory driver, a USB driver, a keypad driver, a WiFi driver, and an audio driver. Further, the device driver 312 may include an inter-process communication (IPC) driver.

The middleware 330 may provide a function required in common by the applications 370. The middleware 330 may provide a function through the API 360 to allow the applications 370 to efficiently use limited system resources within the electronic device. The middleware 330 (for example, the middleware 143) may include at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.

The runtime library 335 may include, for example, a library module used by a complier to add a new function through a programming language while the applications 370 are executed. According to an embodiment of the present disclosure, the runtime library 335 executes input and output, management of a memory, a function associated with an arithmetic function and the like.

The application manager 341 may manage, for example, a life cycle of at least one of the applications 370. The window manager 342 may manage GUI resources used on the screen. The multimedia manager 343 may detect a format required for reproducing various media files and perform an encoding or a decoding of a media file by using a codec suitable for the corresponding format. The resource manager 344 manages resources such as a source code, a memory, or a storage space of at least one of the applications 370.

The power manager 345 may operate together with a basic input/output system (BIOS) to manage a battery or power and provides power information required for the operation. The database manager 346 may manage generation, search, and change of a database to be used by at least one of the applications 370. The package manager 347 may manage an installation or an update of an application distributed in a form of a package file.

The connection manager 348 may manage, for example, a wireless connection such as WiFi or BT. The notification manager 349 may display or notify a user of an event such as an arrival message, an appointment, a proximity alarm or the like, in a manner that does not disturb the user. The location manager 350 may manage location information of the electronic device. The graphic manager 351 may manage a graphic effect provided to the user or a user interface (UI) related to the graphic effect. The security manager 352 provides a general security function required for a system security or a user authentication. When the electronic device (for example, the electronic device 101) has a call function, the middleware 330 may further include a telephony manager for managing a voice of the electronic device or a video call function.

The middleware 330 may include modules configuring various combinations of functions of the above described components. The middleware 330 may provide modules specialized according to types of operation systems to provide distinct functions. The middleware 330 may be adaptively configured in such a way as to remove part of the existing components or to include new components.

The API 360 (for example, API 145) may be a set of API programming functions, and may be provided with a different configuration according to an OS. For example, in Android or iOS, a single API set may be provided for each platform. In Tizen, two or more API sets may be provided.

The applications 370 (e.g., application programs 147) may include one or more applications for performing various functions, e.g., home 371, diary 372, SMS/MMS 373, instant message (IM) 374, browser 375, camera 376, alarm 377, context 378, voice dial 379, email 380, calendar 381, media player 382, album 383, clock 384, health care (e.g., an application for measuring amount of exercise, blood sugar level, etc.), and environment information (e.g., an application for providing atmospheric pressure, humidity, temperature, etc.).

The applications 370 may include an application for supporting information exchange between an electronic device (e.g., electronic device 101) and an external device (e.g., electronic devices 102 and 104), which is hereafter called 'information exchange application'). The information exchange application is capable of including a notification relay application for relaying specific information to external devices or a device management application for managing external devices.

For example, the notification relay application may include a function for relaying notification information, created in other applications of the electronic device (e.g., SMS/MMS application, email application, health care application, environment information application, etc.) to external devices (e.g., electronic devices 32 and 34). In addition, the notification relay application is capable of receiving notification information from external devices to provide the received information to the user.

The device management application may manage (e.g., install, remove or update) at least one function of an external device (e.g., electronic devices 102 and 104) communicating with the electronic device. Examples of the function are a function of turningon/off the external device or part of the external device, a function of controlling the brightness (or resolution) of the display, applications running on the external device, services provided by the external device, etc. Examples of the services are a call service, messaging service, etc.

The applications 370 may include an application (e.g., a health care application of a mobile medical device, etc.) specified attributes of an external device (e.g., electronic devices 102 and 104). The applications 370 may include applications received from an external device (e.g., a server 106, electronic devices 102 and 104). The applications 370 may include a preloaded application or third party applications that can be downloaded from a server. It should be understood that the components of the program module 310 may be called different names according to types of OS.

According to various embodiments of the present disclosure, at least part of the program module 310 can be implemented with software, firmware, hardware, or any combination of two or more of them. At least part of the program module 310 can be implemented (e.g., executed) by a processor (e.g., processor 120). At least part of the programing module 310 may include modules, programs, routines, sets of instructions or processes, etc., in order to perform one or more functions.

Various embodiments of the present disclosure provide a handheld electronic device capable of transmitting, to a card reading apparatus, card information carried by magnetic field signals, and thus making payment for costs. Various embodiments of the present disclosure also provide a handheld electronic device capable of making payment for costs, etc., through communication with a card reading apparatus, although the apparatus is not equipped with an NFC module, without modifying the existing solution, as if a magnetic card is used against the apparatus. Therefore, the present disclosure is capable of leading to activating offline mobile payment.

The term 'module' as used in various embodiments of the present disclosure may mean a unit including one of hardware, software, and firmware or any combination of two or more of them. The 'module' may be interchangeable with the term 'unit,' 'logic,' 'logical block,' 'component,' or 'circuit.' The 'module' may be the smallest unit of an integrated component or a part thereof. The 'module' may be the smallest unit that performs one or more functions or a part thereof. The 'module' may be mechanically or electronically implemented. For example, the 'module' according to various embodiments of the present disclosure may include at least one of the following: application-specific integrated circuit (ASIC) chips, field-programmable gate arrays (FPGAs), and programmable-logic devices for performing certain operations, which are now known or will be developed in the future.

At least part of the method (e.g., operations) or system (e.g., modules or functions) according to various embodiments of the present disclosure can be implemented with instructions as programming modules that are stored in computer-readable storage media. One or more processors (e.g., processor 120) can execute instructions, thereby performing the functions. An example of the computer-readable storage media may be a memory 130. At least part of the programming modules can be implemented (executed) by a processor. At least part of the programing module may include modules, programs, routines, sets of instructions or processes, etc., in order to perform one or more functions.

Examples of computer-readable media include: magnetic media, such as hard disks, floppy disks, and magnetic tape, optical media such as compact disc-ROM (CD-ROM) disks and DVD, magneto-optical media, such as floptical disks, and hardware devices that are specially configured to store and perform program instructions (e.g., programming modules), such as ROM, RAM, flash memory, etc. Examples of program instructions include machine code instructions created by assembly languages, such as a compiler, and code instructions created by a high-level programming language executable in computers using an interpreter, etc. The described hardware devices may be configured to act as one or more software modules in order to perform the operations and methods described above, or vice versa.

Modules or programming modules according to various embodiments of the present disclosure may include one or more components, remove part of them described above, or include new components. The operations performed by modules, programming modules, or the other components, according to various embodiments of the present disclosure, may be executed in serial, parallel, repetitive or heuristic fashion. Part of the operations can be executed in any other order, skipped, or executed with additional operations.

The various embodiments described in the present disclosure are merely provided to assist in a comprehensive understanding of the disclosure and the technology thereof and are not suggestive of limitation. Although various embodiments of the disclosure have been described in detail above, it should be understood that many variations and modifications of the basic inventive concept herein described, which may be apparent to those skilled in the art, will still fall within the scope of the various embodiments of the disclosure as defined in the appended claims.

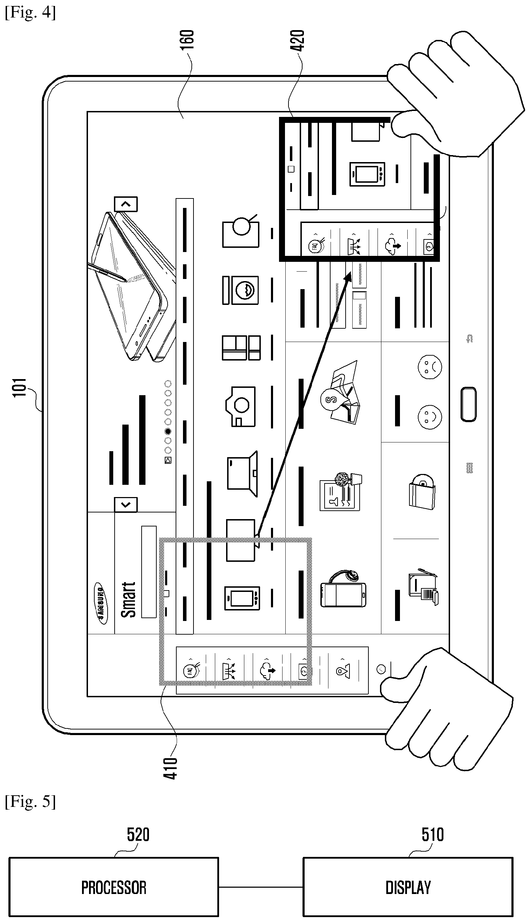

FIG. 4 is a diagram illustrating first and second UI components displayed on an electronic device according to various embodiments of the present disclosure.

Referring to FIG. 4, the electronic device 101 may display various kinds of contents on the display 160. These contents may include, but not limited to, web pages, images, videos, application screens, and the like.

In various embodiments, the electronic device 101 may display, together with content, a first UI component 410 and/or a second UI component 420 on the display 160 in response to a first input. The electronic device 101 may display each of the first and second UI components 410 and 420 in the form of a closed loop (e.g., a square, a triangle, or a circle) so as to distinguish the inner areas of the first and second UI components 410 and 420 from the entire image displayed on the display 160.

The first input may be, for example, a signal of touching or dragging the display. The electronic device 101 may display the first UI component 410 and/or the second UI component 420, based on the location of the first input. For example, the electronic device 101 may display the second UI component 420 in the vicinity of the location of the first input.

The electronic device 101 may display the first UI component 410 and the second UI component 420 on the display 160 in response to the first input while content, such as an image, is being displayed. The first UI component 410 may be displayed on a part of the image. This part of the image may be displayed in the inner area of the first UI component 410. This part of the image may be still viewable to a user. The second UI component 420 may contain a duplicated image of the image displayed in the inner area of the first UI component 410. For example, the electronic device 101 may output image data, which corresponds to the image displayed in inner area of the first UI component 410, to the inner area of the second UI component 420.

The electronic device 101 still displays an original image, displayed on the display 160, in the inner area of the first UI component 410, whereas the electronic device 101 may display, in the inner area of the second UI component 420, a duplicated image of the image, which is displayed in the inner area of the first UI component 410, instead of an original image corresponding to the second UI component 420. In this case, if a user selects an icon displayed in the inner area of the second UI component 420, the electronic device 101 may regard this as selecting an icon displayed in the inner area of the first UI component 410 and then perform a corresponding function. Therefore, a user who desires to use a certain function can easily select a corresponding icon, even though being distant from a grasped place, without detaching any grasping hand from the electronic device 101.

The electronic device 101 may display the same image in the respective inner areas of the first and second UI components 410 and 420 in the same scale. However, this image may also be displayed in different scales. The electronic device 101 may enlarge an image of the inner area of the first UI component 410 and then display the enlarged image in the inner area of the second UI component 420. In contrast, the electronic device 100 may reduce an image of the inner area of the first UI component 410 and then display the reduced image in the inner area of the second UI component 420.

FIG. 5 is a schematic block diagram illustrating an electronic device according to an embodiment of the present disclosure.

Referring to FIG. 5, the electronic device 101 may include a display 510 and a processor 520. The electronic device 101 may further include other essential or optional elements in addition to elements exemplarily shown in FIG. 5. For example, the electronic device 101 may be configured to have an input module (e.g., a touch panel, a hard key, a proximity sensor, a biometric sensor, etc.), a power supply unit, a memory, and/or the like.

The display 510 may be formed of a touch screen as shown in FIG. 4 or as indicated by reference numerals 160 and 260 in FIGS. 1 and 2. The display 510 may receive a touch, gesture, proximity or hovering input, for example, using an electronic pen or user's finger. Under the control of the processor 520, the display 510 may display various kinds of contents (e.g., web pages, videos, images, application execution screens, etc.). Also, under that control of the processor 520, the display 510 may display the above-discussed first and second UI components 410 and 420 together with the above-listed contents. An input device may be further disposed at a bezel region which encompasses the display 510. For example, portions of the touch panel 252 may be extended to the bezel region. Accordingly, the electronic device 101 may respond to any input (e.g., a touch, a gesture, a proximity, or a hovering) with respect to the bezel region.

The processor 520 may be identical or similar to the processor 120 in FIG. 1 or the processor 210 in FIG. 2. The processor 520 may display, in the inner area of the second UI component 420, a duplicated image of an image located in the inner area of the first UI component 410, based on the first input. The processor 520 may copy image data displayed in the inner area of the first UI component 410 and then output the copied image data to the inner area of the second UI component 420. Alternatively, the processor 520 may control a display driver to output data, corresponding to an image located in the inner area of the first UI component 410, to the inner area of the second UI component 420.

The first input may be, for example, a touch, gesture, proximity or hovering input, which uses an electronic pen or user's finger. The processor 520 may determine a specific location for displaying the second UI component 420, based on the location of the first input.

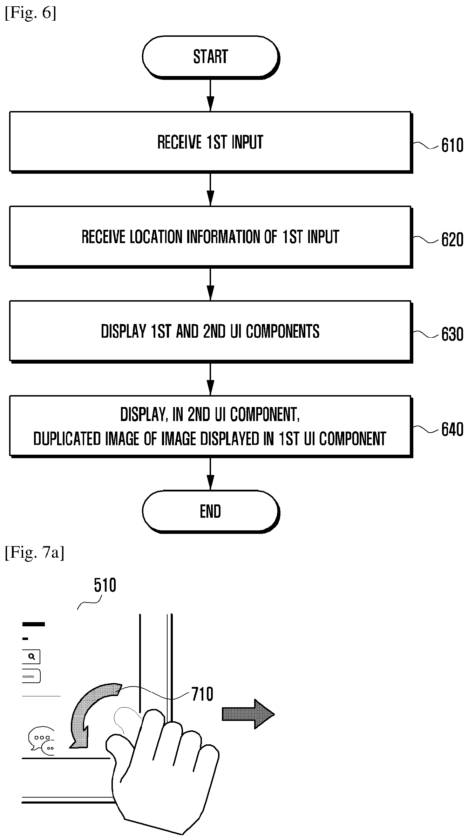

FIG. 6 is a flow diagram illustrating a process of displaying first and second UI components at an electronic device according to an embodiment of the present disclosure.

Referring to FIG. 6, at operation 610, the electronic device 101 may receive the first input. The first input may be a touch, gesture, proximity or hovering input, which uses an electronic pen or user's finger. The electronic device 101 may receive the first input through the display 510 shown in FIG. 5 or may receive the first input through a bezel region that encompasses the display 510.

At operation 620, the electronic device 101 may receive information about the location of the first input. Using this location information of the first input, the electronic device 101 may determine a specific location for displaying the first UI component 410 or the second UI component 420.

At operation 630, the electronic device 101 may display the first UI component 410 and/or the second UI component 420 on the display 510. For example, when the first input is received through the display 510, the electronic device 101 may display the second UI component 420 at or near the location where the first input occurs. For example, if the first input occurs at the bezel region around the display 510, the electronic device 101 may display the second UI component 420 on the nearest area of the display 510 from the bezel region.

When the first input occurs at a lower left part of the electronic device 101, the electronic device 101 may display the first UI component 410 on an upper left part of the display 510. When the first input occurs at a lower right part of the electronic device 101, the electronic device 101 may display the first UI component 410 on an upper right part of the display 510.

When the first input occurs at a lower left part of the electronic device 101, the electronic device 101 may display the first UI component 410 on an upper right part of the display 510. When the first input occurs at a lower right part of the electronic device 101, the electronic device 101 may display the first UI component 410 on an upper left part of the display 510.

The above examples are not to be construed as a limitation. Regardless of the location where the first input occurs, the electronic device 101 may display the first UI component 410 and/or the second UI component 420 at a predetermined location.

Each of the first and second UI components 410 and 420 may have various shapes. For example, each of the first and second UI components 410 and 420 may be displayed in the form of a closed loop, which may be shaped as, for example, a rectangle, a circle, a triangle, and the like. The first and second UI components 410 and 420 may have the same shape and size. Alternatively, both UI components may be different from each other in shape and/or size.

At operation 640, the electronic device 101 may display, in the inner area of the second UI component 420, a duplicated image of an image displayed in the inner area of the first UI component 410. For example, the electronic device 101 may copy image data displayed in the inner area of the first UI component 410 and then output the copied image data to the inner area of the second UI component 420. In another example, the electronic device 101 may control a display driver to output data, corresponding to an image located in the inner area of the first UI component 410, to the inner area of the second UI component 420.

In case of displaying a web page on the display 510, the electronic device 101 may create an image corresponding to the entire web page by using the graphic manager 351. Then the electronic device 101 may display the created image on the display 510 by using the display driver 323. The electronic device 101 may display parts of the entire web page image on the display 510, considering the size of the display 510.

When displaying a duplicated image of an image, displayed within the first UI component 410, in the inner area of the second UI component 420, the electronic device 101 may copy image data corresponding to the inner area of the first UI component 410 among the entire image displayed on the display 510 and then output the copied image data to the inner area of the second UI component 420. The electronic device 101 may display a duplicated image in the inner area of the second UI component 420 by using image data corresponding to the inner area of the first UI component 410 among the entire image created by the graphic manager 351.

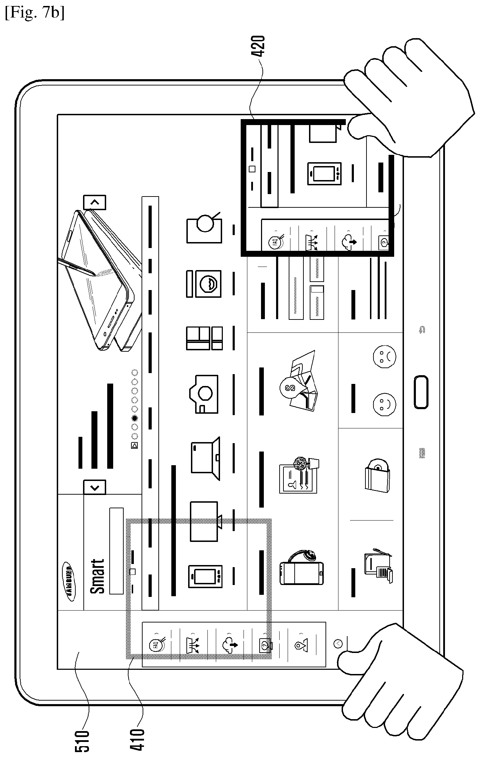

FIGS. 7A and 7B are diagrams illustrating a situation in which the second UI component is created, based on the location of the first input, at an electronic device according to various embodiments of the present disclosure.

Referring to FIG. 7A, a user may grasp a lower right part of the electronic device 101. In this state, the user may create the first input 710 by, for example, drawing a circle in a counterclockwise direction from a certain point on the display 510. This is not to be construed as a limitation. In other examples, the user may create the first input 710 in various manners such as drawing a predefined trace in a hovering state over the display 510, touching the display 510 several times at regular intervals, or touching the display 510 for a long time.

The electronic device 101 may store the location where the first input 710 is created, and then utilize the stored location when displaying the first UI component 410 and/or the second UI component 420.

Referring to FIG. 7B, the electronic device 101 may display the first UI component 410 and the second UI component 420 on the display 510. The electronic device 101 may display the second UI component 420 near the location of the first input 710. Additionally, in the inner area of the second UI component 420, the electronic device 101 may display a duplicated image of an image displayed in the inner area of the first UI component 410.

Since the second UI component 420 is displayed near the location of the first input 710, the user may select an icon displayed in the second UI component 420 while still grasping the electronic device 101. Although a desired icon is disposed in the first UI component 410 which is hard for the user to select in a grasping state, the user may easily select the icon through the second UI component 420.

A location where the second UI component 420 is displayed may be predefined as default by a manufacturer of the electronic device 101 and/or set by the user. For example, if the user frequently uses the right hand, the user may set the second UI component 420 to be always displayed on a lower right part of the display 510 regardless of the location of the first input 710. Similarly, if the user frequently uses the left hand, the user may set the second UI component 420 to be always displayed on a lower left part of the display 510 regardless of the location of the first input 710.

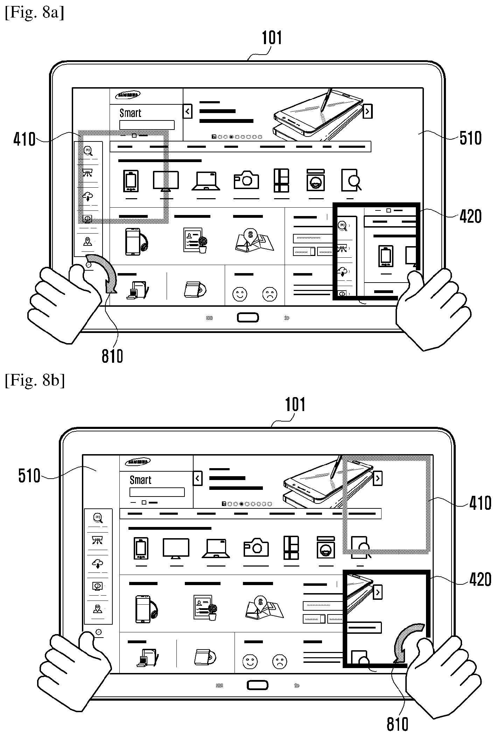

FIGS. 8A and 8B are diagrams illustrating a situation in which the first UI component is created, based on the location of the first input, at an electronic device according to various embodiments of the present disclosure.

Referring to FIGS. 8A and 8B, a user may grasp both lower parts of the electronic device 101. The user may create the first input 810 with regard to the electronic device 101. Based on a location of the first input 810, the electronic device 101 may determine a location of the first UI component 410.

Referring to FIG. 8A, the user may create the first input 810 at a lower left part of the display 510. Then the electronic device 101 may display the first UI component 410 on an upper left part of the display 510 in response to the first input 810. The electronic device 101 may display the second UI component 420 on the display 510 in response to the first input 810. An image displayed in the inner area of the second UI component 420 may be identical with that displayed in the inner area of the first UI component 410.

Referring to FIG. 8B, the user may create the first input 810 at a lower right part of the display 510. Then the electronic device 101 may display the first UI component 410 on an upper right part of the display 510 in response to the first input 810. The electronic device 101 may display the second UI component 420 on the display 510 in response to the first input 810. An image displayed in the inner area of the second UI component 420 may be identical with that displayed in the inner area of the first UI component 410.

The electronic device 101 may determine a location of the first UI component 410, based on content displayed on the display 510. For example, when a web page or an application execution screen is displayed on the display 510, a menu icon may be displayed on an upper left part or an upper right part of the display 510. Then the user may scroll up and down content displayed in the center of the display 510 and, if necessary, may select a menu. Accordingly, when the first and second UI components 410 and 420 are disposed as shown in FIGS. 8A and 8B, the user may scroll the displayed content with holding lower parts of the electronic device and, if necessary, easily select the menu through the second UI component 420.

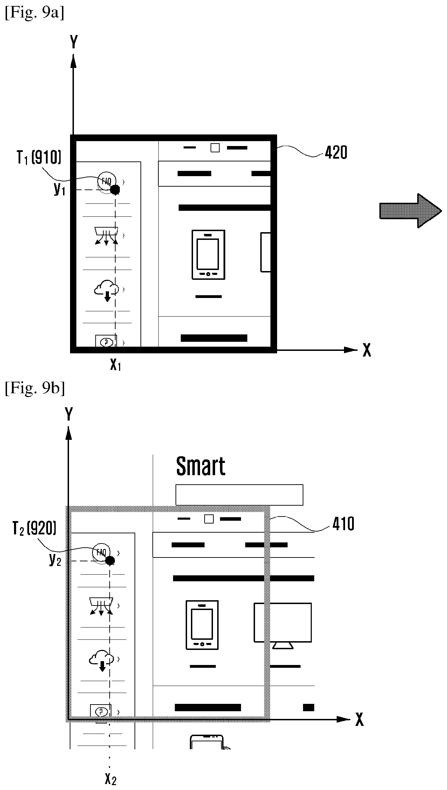

FIGS. 9A and 9B are diagrams illustrating a situation in which a predetermined function is performed in response to a touch on the inner area of the second UI component at an electronic device according to various embodiments of the present disclosure.

Referring to FIG. 9A, the second UI component 420 is shown on the Cartesian coordinate plane. When a user touches a certain point T1 910 in the inner area of the second UI component 420, the electronic device 101 may convert the touch point T1 910 to a location on the Cartesian coordinate plane. For example, the electronic device 101 may calculate the coordinates (x1, y1) of the touch point T1 910.

Referring to FIG. 9B, the first UI component 410 is shown on the Cartesian coordinate plane. The electronic device 101 may calculate a point having the same location as the user's touch point T1 910 on the Cartesian coordinate plane where the first UI component 410 is displayed. For example, the electronic device 101 may calculate a point T2 920 on the Cartesian coordinate plane where the first UI component 410 is displayed. A location value (x2, y2) of the point T2 920 is identical with a location value (x1, y1) of the point T1 910.

The first and second UI components 410 and 420 may have the same shape and different sizes. In this case, the electronic device 101 may calculate the point T2 920, based on the location of the point T1 910 with reference to a size ratio of the first UI component 410 to the second UI component 420.

By using the second UI component 420 disposed near a grasped location of the electronic device 101, the user may easily select a desired point located beyond a reachable range from the grasped location while still holding the electronic device 101.

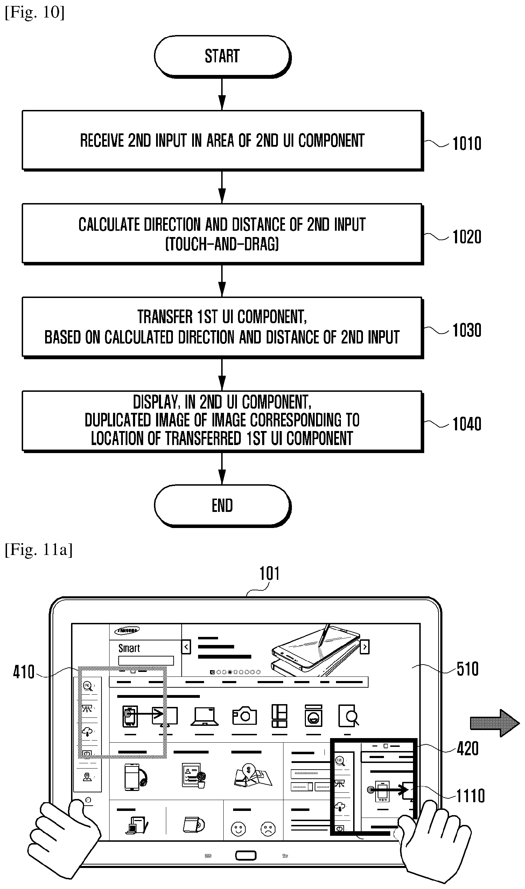

FIG. 10 is a flow diagram illustrating a process of moving the first UI component in response to the second input on the inner area of the second UI component at an electronic device according to an embodiment of the present disclosure.

Referring to FIG. 10, at operation 1010, the electronic device 101 may receive the second input in the inner area of the second UI component 420. The second input may be a touch-and-drag input that occurs in the inner area of the second UI component 420 while the second UI component 420 is not moving. This is not to be construed as a limitation. Alternatively, the electronic device 101 may receive the second input, using a separate hard key.

At operation 1020, the electronic device 101 may calculate the direction and distance of the touch-and-drag input. For example, the electronic device 101 may calculate the initial location of a touch and then calculate a moving direction and distance of the touch.

At operation 1030, based on the calculated direction and distance of the touch-and-drag input, the electronic device 101 may transfer the first UI component 410. For example, if the touch-and-drag input is moved to the first distance in the first direction, the electronic device 101 may transfer the first UI component 410 to the full extent of the first distance in the first direction.

When the touch-and-drag input is moved to the first distance in the first direction, the electronic device 101 may transfer the first UI component 410 to the half extent of the first distance in the first direction. Ehen the touch-and-drag input is moved to the first distance in the first direction, the electronic device 101 may transfer the first UI component 410 to the double extent of the first distance in the first direction.

At operation 1040, the electronic device 101 may display, in the second UI component 420, a duplicated image of an image corresponding to a location of the transferred first UI component 410. For example, the electronic device 101 may copy image data displayed in the inner area of the first UI component 410 and then output the copied image data to the inner area of the second UI component 420. The electronic device 101 may control the display driver to output data, corresponding to an image located in the inner area of the first UI component 410, to the inner area of the second UI component 420.

While the first UI component 410 is transferred continuously, the electronic device 101 may continuously display, in the inner area of the second UI component 420, images temporarily contained in the inner area of the first UI component 410.

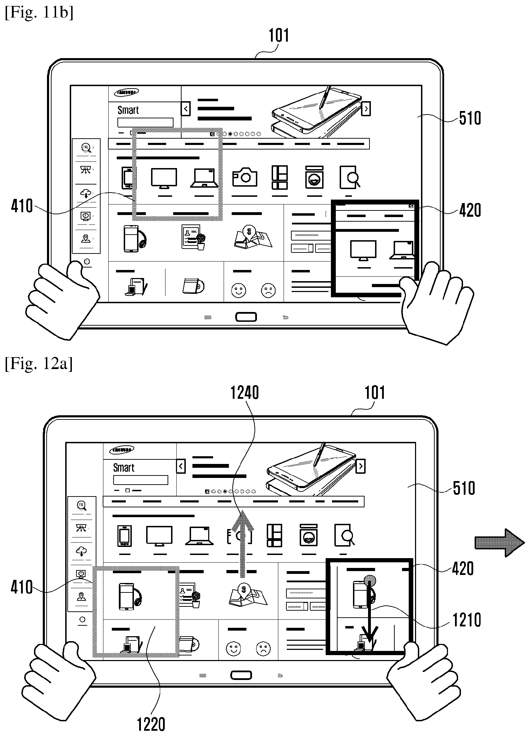

FIGS. 11A and 11B are diagrams illustrating a situation in which a first UI component is transferred in response to the second input on the inner area of the second UI component at an electronic device according to various embodiments of the present disclosure.

Referring to FIG. 11A, the electronic device 101 may display certain content on the display 510 and simultaneously display the first and second UI components 410 and 420. A user who desires to view the displayed content may grasp both lower parts of the electronic device 101. The first UI component 410 may be displayed on an upper left part of the electronic device 101, and the second UI component 420 may be displayed on a lower right part of the electronic device 101. The user may create various second inputs in the inner area of the second UI component 420 without removing a grasp from the lower right part of the electronic device 101.

The electronic device 101 may calculate the direction and distance of a touch-and-drag input. For example, the electronic device 101 may calculate the initial location of a touch and then calculate a moving direction and distance of the touch. Based on the calculated direction and distance of the touch-and-drag input, the electronic device 101 may transfer the first UI component 410.

Referring to FIG. 11A, the electronic device 101 may recognize the occurrence of a touch-and-drag input 1110 in the inner area of the second UI component 420. Then the electronic device 101 may calculate a moving direction and distance of the touch-and-drag input 1110.

Referring to FIG. 11B, the electronic device 101 may transfer the first UI component 410, based on the calculated direction and distance. For example, the electronic device 101 may transfer the first UI component 410 to the same distance as that of the touch-and-drag input in the same direction as that of the touch-and-drag input. When the first UI component 410 is transferred, the electronic device 101 may display, in the inner area of the second UI component 420, a duplicated image of an image displayed in the inner area of the first UI component 410.

In this manner, the user may move the first UI component 410 by using the second UI component 420. Accordingly, the user may easily select any icon disposed at any position of the display 510 while transferring the first UI component 410 with the electronic device 101 grasped.

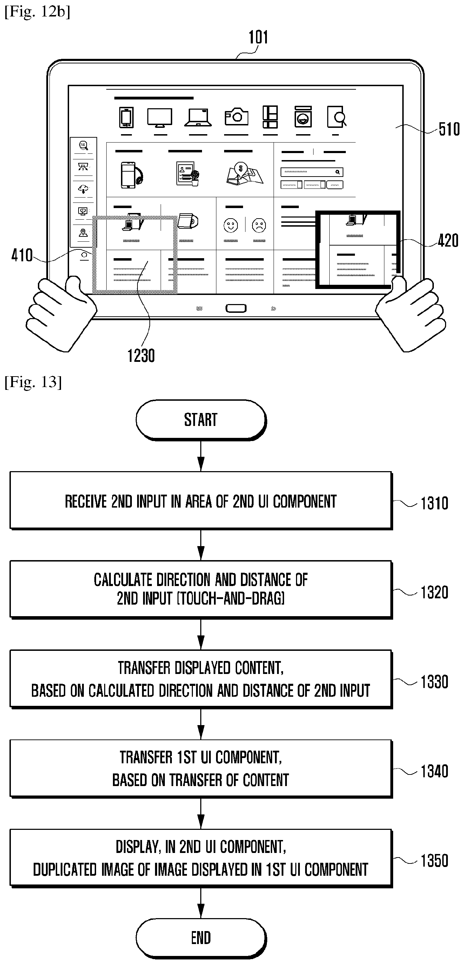

FIGS. 12A and 12B are diagrams illustrating a situation in which a first UI component is transferred to and located at the end of a display at an electronic device according to various embodiments of the present disclosure.

Referring to FIG. 12A, the electronic device 101 may display certain content on the display 510 and simultaneously display the first and second UI components 410 and 420. A user who desires to view the displayed content may grasp both lower parts of the electronic device 101. The first UI component 410 may be displayed on an upper left part of the electronic device 101, and the second UI component 420 may be displayed on a lower right part of the electronic device 101. The user may select any icon or content disposed at any position of the display 510 by transferring the first UI component 410 without removing a grasp from the electronic device 101.

The electronic device 101 may calculate the direction and distance of a touch-and-drag input. Based on the calculated direction and distance of the touch-and-drag input, the electronic device 101 may transfer the first UI component 410.

Referring to FIG. 12A, the electronic device 101 may recognize the occurrence of a touch-and-drag input 1210 in the inner area of the second UI component 420. The electronic device 101 may calculate a moving direction and distance of the touch-and-drag input 1210. Based on the calculated direction and distance, the electronic device 101 may transfer the first UI component 410 in the downward direction on the display 510.

Referring to FIGS. 12A and 12B, if the first UI component 410 is located at the lower end of the display 510, and if the touch-and-drag input 1210 faces downward, the electronic device 101 may change the content displayed on the display 510 in response to the touch-and-drag input 1210 rather than transferring the first UI component 410. For example, if the first UI component 410 is located at the lower end of the display 510 and not transferred downward any more in response to the touch-and-drag input 1210 as shown in FIG. 12A, the electronic device 101 may transfer the entire content displayed on the display 510, based on the direction and distance of the touch-and-drag input 1210. For example, the electronic device 101 may transfer the content (e.g., a web page) in the opposite direction of the touch-and-drag input 1210 (i.e., in the upward direction 1240) in proportion to the moving distance of the touch-and-drag input 1210 (e.g., to the same extent of distance). As the web page is transferred, a portion 1220 (see FIG. 12A) of the web page previously displayed in the first UI component 410 may be changed to another portion 1230 (see FIG. 12B). Therefore, the electronic device 101 may display a duplicated image of the latter portion 1230 in the second UI component 420.

In this manner, the user may easily scroll the web page displayed on the display 510 by using the second UI component 420 while maintaining a grasped state of the electronic device 101.

FIG. 13 is a flow diagram illustrating a process of transferring content displayed on a display in response to the second input on the inner area of the second UI component at an electronic device according to an embodiment of the present disclosure.

Referring to FIG. 13, at operation 1310, the electronic device 101 may receive the second input in the inner area of the second UI component 420. The second input may be a touch-and-drag input that occurs in the inner area of the second UI component 420 while the second UI component 420 is not moving. This is not to be construed as a limitation. Alternatively, the electronic device 101 may receive the second input, using a separate hard key.

At operation 1320, the electronic device 101 may calculate the direction and distance of the touch-and-drag input. For example, the electronic device 101 may calculate the initial location of a touch and then calculate a moving direction and distance of the touch.

At operation 1330, based on the calculated direction and distance of the touch-and-drag input, the electronic device 101 may transfer content displayed on the display 510. For example, if the touch-and-drag input is moved to the first distance in the first direction, the electronic device 101 may transfer the displayed content to the full extent of the first distance in the first direction.

When the touch-and-drag input is moved to the first distance in the first direction, the electronic device 101 may transfer the displayed content to the half extent of the first distance in the first direction. When the touch-and-drag input is moved to the first distance in the first direction, the electronic device 101 may transfer the displayed content to the double extent of the first distance in the first direction.

When the touch-and-drag input is moved to the first distance in the first direction, the electronic device 101 may transfer the displayed content in proportion to the first distance in the opposite direction of the first direction.

At operation 1340, the electronic device 101 may transfer the first UI component 410, based on the transfer of the content.

At operation 1350, the electronic device 101 may display, in the second UI component 420, a duplicated image of an image corresponding to a location of the transferred first UI component 410. According to various embodiments, while the first UI component 410 is transferred continuously, the electronic device 101 may continuously display, in the inner area of the second UI component 420, images temporarily contained in the inner area of the first UI component 410.

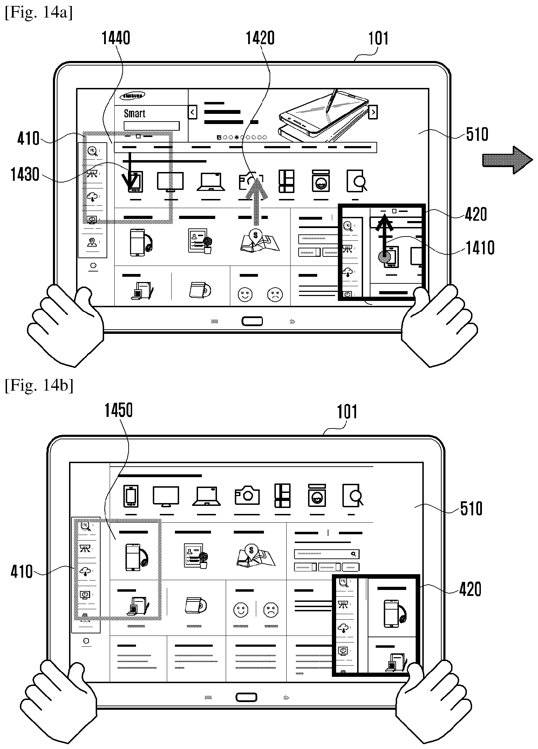

FIGS. 14A and 14B are diagrams illustrating a situation in which content displayed on a display is transferred in response to the second input on the inner area of the second UI component at an electronic device according to various embodiments of the present disclosure.

Referring to FIG. 14A, the electronic device 101 may display certain content on the display 510 and simultaneously display the first and second UI components 410 and 420. A user who desires to view the displayed content may grasp both lower parts of the electronic device 101. The first UI component 410 may be displayed on an upper left part of the electronic device 101, and the second UI component 420 may be displayed on a lower right part of the electronic device 101. The user may create various second inputs (e.g., a touch-and-drag input) in the inner area of the second UI component 420 without removing a grasp from the lower right part of the electronic device 101.

The electronic device 101 may calculate the direction and distance of a touch-and-drag input. Based on the calculated direction and distance of the touch-and-drag input, the electronic device 101 may transfer the content displayed on the display 510. Referring to FIG. 14A, the electronic device 101 may recognize the occurrence of a touch-and-drag input 1410 in the inner area of the second UI component 420. The electronic device 101 may calculate a moving direction and distance of the touch-and-drag input 1410.

Referring to FIGS. 14A and 14B, the electronic device 101 may transfer the displayed content, based on the calculated direction and distance. For example, the electronic device 101 may transfer the displayed content in the same direction of the touch-and-drag input 1410 (i.e., in the upward direction 1420) in proportion to the moving distance of the touch-and-drag input 1410 (e.g., to the same extent of distance). Further, the electronic device 101 may transfer the first UI component 410, based on the transfer of the content. For example, the first UI component 410 may be transferred in the opposite direction of the content (i.e., in the downward direction 1430). As the first UI component 410 is transferred, a portion 1440 (see FIG. 14A) of the content previously displayed in the first UI component 410 may be changed to another portion 1450 (see FIG. 14B). Referring to FIG. 14B, the electronic device 101 may display a duplicated image of the latter portion 1450 in the second UI component 420.

In this manner, the user may easily transfer the content displayed on the display 510 by using the second UI component 420 while maintaining a grasped state of the electronic device 101.

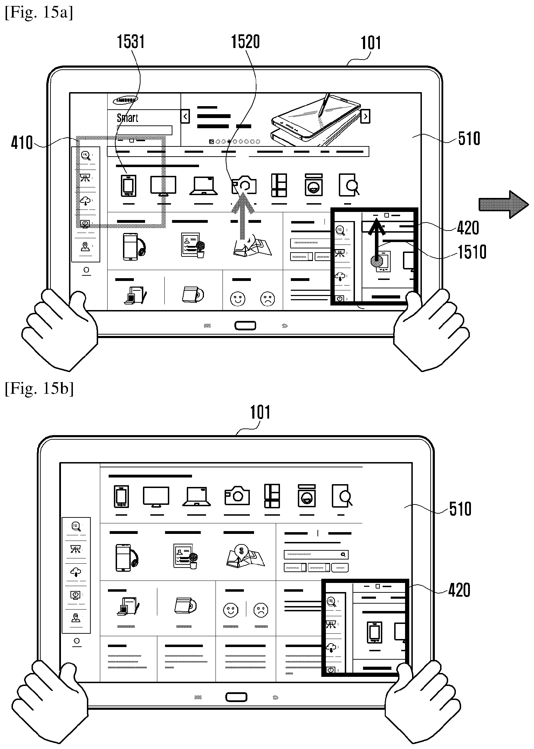

FIGS. 15A and 15B are diagrams illustrating a situation in which the first UI component is not transferred when content displayed on a display is transferred in response to the second input on the inner area of the second UI component at an electronic device according to various embodiments of the present disclosure.

Referring to FIG. 15A, the electronic device 101 may display certain content on the display 510 and simultaneously display the first and second UI components 410 and 420. A user who desires to view the displayed content may grasp both lower parts of the electronic device 101. The first UI component 410 may be displayed on an upper left part of the electronic device 101, and the second UI component 420 may be displayed on a lower right part of the electronic device 101. The user may create various second inputs (e.g., a touch-and-drag input) in the inner area of the second UI component 420 without removing a grasp from the lower right part of the electronic device 101.

The electronic device 101 may calculate the direction and distance of a touch-and-drag input. Based on the calculated direction and distance of the touch-and-drag input, the electronic device 101 may transfer the content displayed on the display 510. Referring to FIG. 15A, the electronic device 101 may recognize the occurrence of a touch-and-drag input 1510 in the inner area of the second UI component 420. The electronic device 101 may calculate a moving direction and distance of the touch-and-drag input 1510.

Referring to FIGS. 15A and 15B, the electronic device 101 may transfer the displayed content, based on the calculated direction and distance. For example, the electronic device 101 may transfer the displayed content in the same direction of the touch-and-drag input 1510 (i.e., in the upward direction 1520) in proportion to the moving distance of the touch-and-drag input 1510 (e.g., to the same extent of distance).

Even though the content is transferred, the electronic device 101 may not transfer the first UI component 410. For example, when the content displayed on the display 510 is transferred, the electronic device 101 may not display the first UI component 410 on the display 510 (see FIG. 15B) and may still display, in the inner area of the second UI component 420, a duplicated image of an image previously displayed in the inner area of the first UI component 410. Since the image displayed in the inner area of the second UI component 420 is fixed regardless of the transfer of the content, the user may select a menu icon or content (e.g., an icon 1531) previously disposed in the inner area of the first UI component 410 while viewing the transferring content displayed on the display 510.

In this manner, the user may easily select any content, menu icon, or the like, which is not displayed on the display 510, by using the second UI component 420 while maintaining a grasped state of the electronic device 101.

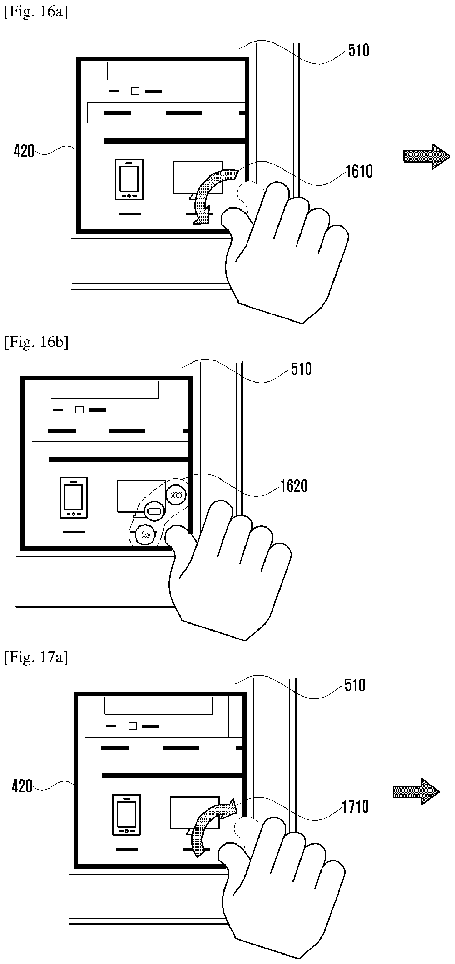

FIGS. 16A and 16B are diagrams illustrating a situation in which the third UI component is created in response to the third input at an electronic device according to various embodiments of the present disclosure.

Referring to FIG. 16A, a user may grasp a lower right part of the electronic device 101. In this state, the user may create the third input 1610. For example, the user may create the third input 1610 by drawing a circle in a counterclockwise direction from a certain point on the display 510. This is not to be construed as a limitation. In other examples, the user may create the third input 1610 in various manners such as drawing a predefined trace in a hovering state over the display 510, touching the display 510 several times at regular intervals, or touching the display 510 for a long time.

Referring to FIG. 16B, the electronic device 101 may display the third UI component 1620 on the display 510, based on the location of the third input 1610. For example, the electronic device 101 may display the third UI component 1620 near the location of the third input 1610.

Since the third UI component 1620 is displayed near the location of the third input 1610, a user may select icons contained in the third UI component 1620 without removing a grasp from the electronic device 101. Such icons contained in the third UI component 1620 may replace functions of some hard keys of the electronic device 101. Therefore, the user may use the function of a desired hard key disposed beyond a reachable range from the grasped location while maintaining a grasped state of the electronic device 101.

While FIGS. 16A and 16B show that the location of the third input 1610 and the location of the third UI component 1620 overlap with the second UI component 420, the location of the third UI component 1620 may be determined by a manufacturer of the electronic device 101 and/or set by a user. For example, if a user frequently uses the right hand, the user may set the third UI component 1620 to be always displayed on a lower right part of the display 510 regardless of the location of the third input 1610. Similarly, if a user frequently uses the left hand, the user may set the third UI component 1620 to be always displayed at a lower left part of the display 510 regardless of the location of the third input 1610.

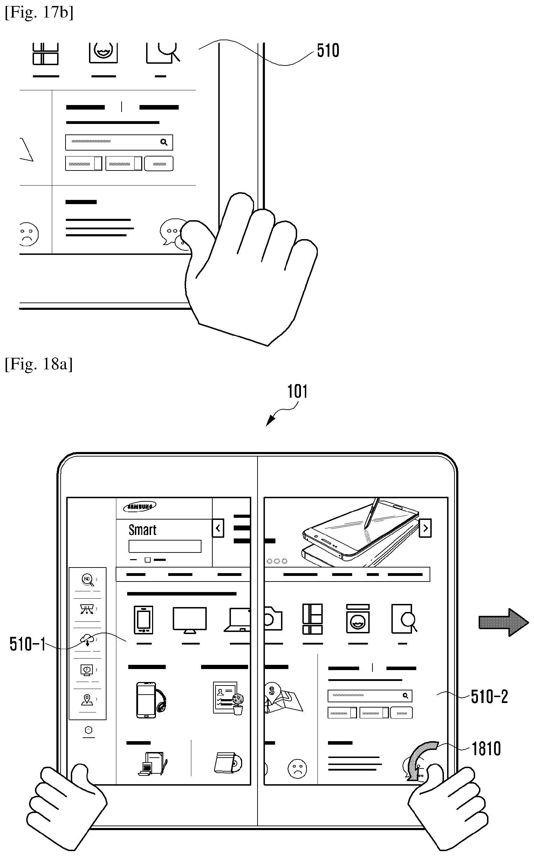

FIGS. 17A and 17B are diagrams illustrating a situation in which the first and second UI components disappear in response to the fourth input at an electronic device according to various embodiments of the present disclosure.

Referring to FIG. 17A, a user may grasp a lower right part of the electronic device 101. In this state, the user may create the fourth input 1710. For example, the user may create the fourth input 1710 by drawing a circle in a clockwise direction from a certain point on the display 510. This is not to be construed as a limitation. In other examples, the user may create the fourth input 1710 in various manners such as drawing a predefined trace in a hovering state over the display 510, touching the display 510 several times at regular intervals, or touching the display 510 for a long time.

Referring to FIG. 17B, the electronic device 101 may control the first and/or second UI component(s) 410 and/or 420 to disappear from the display 510, based on the fourth input 1710. Although FIGS. 17A and 17B show that the location of the fourth input 1710 overlaps with the second UI component 420.

The first and/or second UI component(s) 410 and/or 420 may automatically disappear without the fourth input 1710. For example, the electronic device 101 may be set to automatically remove the first and/or second UI component(s) 410 and/or 420 when a given time elapses after the first and/or second UI component(s) 410 and/or 420 are/is displayed. Various options for the disappearance of the first and/or second UI component(s) 410 and/or 420 may be set by the manufacturer and/or the user.

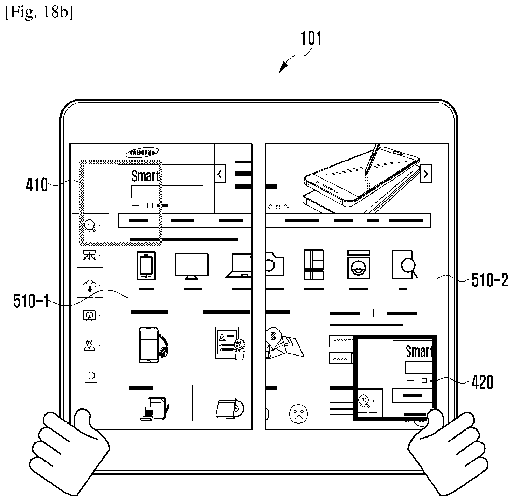

FIGS. 18A and 18B are diagrams illustrating a situation in which the first and second UI components are created, based on the location of the first input, at an electronic device having a plurality of displays according to various embodiments of the present disclosure.

Referring to FIG. 18A, the electronic device 101 may include two displays 510-1 and 510-2 or more. A user may unfold the two displays 510-1 and 510-2 and grasp a lower right part of the electronic device 101. In this state, the user may create the first input 1810. For example, the user may create the first input 1810 by drawing a circle in a counterclockwise direction from a certain point on the display 510. This is not to be construed as a limitation.

The electronic device 101 may store the location of the first input 1810 and then utilize the stored location when displaying the first UI component 410 and/or the second UI component 420.

Referring to FIG. 18B, the electronic device 101 may display the first UI component 410 on the first display 510-1, and also display the second UI component 420 on the second display 510-2. For example, the electronic device 101 may display the second UI component 420 on the second display 510-2 where the first input 1810 occurs, and display the first UI component 410 on the first display 510-1 where no first input occurs. As discussed above, the electronic device 101 may display, in the inner area of the second UI component 420, a duplicated image of an image displayed in the inner area of the first UI component 410.

Since the second UI component 420 is displayed on the second display 510-2, the user may select an icon or the like displayed in the second UI component 420 without removing a grasp from the electronic device 101. While maintaining a grasped state of the electronic device 101, the user may easily select, through the second UI component 420, a desired icon or the like displayed on the first display 510-1. In the electronic device having two or more displays 510-1 and 510-2, the locations of the first and second UI components 410 and 420 are not limited to the above example. According to various embodiments, the location of the second UI component 420 may be determined by the manufacturer or the user.

The term "module" used in this disclosure may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of ASIC chip, FPGAs, and programmable-logic device, which have been known or are to be developed.

At least part of the device (e.g., modules or functions thereof) or method (e.g., operations) according to various embodiments may be implemented as commands stored, e.g., in the form of program module, in a computer-readable storage medium. In case commands are executed by a processor, the processor may perform a particular function corresponding to that commands. The computer-readable storage medium may be, for example, the memory 130. At least a part of the programming module may be implemented in software, firmware, hardware, or a combination of two or more thereof. At least some of the program module may be implemented (e.g., executed) by, for example, the processor. At least some of the program module may include, for example, a module, a program, a routine, a set of instructions, and/or a process for performing one or more functions.

The non-transitory computer-readable recording medium may include magnetic media such as a hard disk, a floppy disk, and a magnetic tape, optical media such as a CD-ROM and a DVD, magneto-optical media such as a floptical disk, and hardware devices specially configured to store and perform a program instruction. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or programming module according to various embodiments may include or exclude at least one of the above-discussed components or further include any other component. The operations performed by the module, programming module or any other component according to various embodiments may be executed sequentially, in parallel, repeatedly, or by a heuristic method. Additionally, some operations may be executed in different orders or omitted, or any other operation may be added.

While the present disclosure has been shown and described with reference to various embodiments thereof, it will be understood by those skilled in the art that various changes in form and details may be made therein without departing from the scope of the present disclosure as defined by the appended claims.

## Claims

1. An electronic device (101) comprising:
a display configured to receive a user's touch input; and
at least one processor electrically connected to the display,
wherein the at least one processor is configured to display, on the display in response to a first input, a first user interface (UI) component (410) for distinguishing at least part of an entire display area of the display from the entire display area, and a second UI component (420), and
wherein a location of the second UI component (420) displayed on the display is predefined or determined based on a location of the first input;
wherein the electronic device (101) is configured to:
display a duplicated image of an image which is displayed in the inner area of the first UI component, in the second UI component, instead of an original image corresponding to the second UI component; and,
if a user selects an icon displayed in the inner area of the second UI component (420), regard this as selecting the icon displayed in the inner area of the first UI component (410) and perform a corresponding function;
wherein the at least one processor is further configured, in response to the occurrence of a second input corresponding to a touch-and-drag input in the inner area of the second UI component (420), to calculate a moving direction and distance of the touch-and-drag input, and to transfer the position of the first UI component based on the calculated direction and distance;
wherein, when the first UI component approaches an end of the display corresponding to the calculated direction within a predetermined distance, the processor is configured to transfer the content displayed on the display in the opposite direction of the calculated direction rather than transferring the first UI component (410).

2. The electronic device (101) of claim 1, wherein the location of the second UI component (420) is determined as a location near the location of the first input.

3. The electronic device (101) of claim 1, wherein the specific image displayed in the second UI component (420) is different in scale from an image displayed in the first UI component (410).

4. The electronic device (101) of claim 1, wherein the at least one processor is further configured to display a third UI component containing an icon for performing a predetermined function on the display, based on a third input.

5. The electronic device (101) of claim 1, wherein the at least one processor is further configured to remove at least one of the first and second UI components (410, 420) from the display, based on a fourth input.

6. The electronic device of claim 1, wherein the display comprises a first display displaying a first content and a second display displaying a second content,
wherein the at least one processor is configured to:
in response to the first input received from the second display, display on the first display the first user interface (UI) component for distinguishing at least part of the first content from the first content, and
display, on the second display, the second UI component (420).

7. The electronic device of claim 6, wherein the processor is further configured to:
store the location of the first input in a memory of the electronic device, and
display at least one of the first UI component (410) and the second UI component (420) based on the stored location.

8. A control method of an electronic device having a display, the method comprising:
receiving a first input;
displaying, on the display in response to the first input, a first user interface (UI) component (410) for distinguishing at least part of an entire display area of the display from the entire display area, and a second UI component (420);
determining a location of the second UI component (420) displayed on the display, at a predetermined location, or the location being determined based on a location of the first input about which information has been received;
displaying a duplicated image of the image which is displayed in the inner area of the first UI component (410), in the second UI component (420), instead of an original image corresponding to the second UI component (420); and,
if a user selects an icon displayed in the inner area of the second UI component (420), regarding this as selecting the icon displayed in the inner area of the first UI component (410) and performing a corresponding function,
the method further comprising, in response to the occurrence of a second input corresponding to a touch-and-drag input in the inner area of the second UI component (420), calculating a moving direction and distance of the touch-and-drag input, and transferring the position of the first UI component based on the calculated direction and distance;
wherein, when the first UI component approaches an end of the display corresponding to the calculated direction within a predetermined distance, the method comprises transferring the content displayed on the display in the opposite direction of the calculated direction rather than transferring the first UI component (410).

9. The method of claim 8, wherein, if the location of the second UI component (420) is displayed based on the location of the first input, determine that the location of the second UI component (420) as a location near the location of the first input.

10. A computer program comprising instructions which, when the program is executed by the device of claim 1, cause the device to carry out the steps of the method of claim 8.

11. A non-transitory computer-readable recording medium having, recorded thereon, the computer program of claim 10.

## Patentansprüche

1. Elektronische Vorrichtung (101), die Folgendes umfasst:
eine Anzeige, die so ausgelegt ist, dass sie eine Berührungseingabe eines Benutzers empfängt; und
mindestens einen Prozessor, der elektrisch mit der Anzeige verbunden ist,
wobei der mindestens eine Prozessor so ausgelegt ist, dass er als Reaktion auf eine erste Eingabe eine erste Benutzerschnittstellenkomponente (UI-Komponente) (410) zum Unterscheiden mindestens eines Teils eines gesamten Anzeigebereichs der Anzeige von dem gesamten Anzeigebereich sowie eine zweite UI-Komponente (420) auf der Anzeige anzeigt, und
wobei eine Position der auf der Anzeige angezeigten zweiten UI-Komponente (420) vordefiniert oder basierend auf einer Position der ersten Eingabe bestimmt wird;
wobei die elektronische Vorrichtung (101) dazu ausgelegt ist,
ein dupliziertes Bild eines Bildes, das in dem inneren Bereich der ersten UI-Komponente angezeigt wird, in der zweiten UI-Komponente anzuzeigen anstelle eines Originalbildes, das der zweiten UI-Komponente entspricht, und
wenn ein Benutzer ein in dem inneren Bereich der zweiten UI-Komponente (420) angezeigtes Symbol auswählt, dies als Auswahl des in dem inneren Bereich der ersten UI-Komponente (410) angezeigten Symbols zu betrachten und eine entsprechende Funktion auszuführen;
wobei der mindestens eine Prozessor ferner so ausgelegt ist, dass er als Reaktion auf das Auftreten einer zweiten Eingabe, die einer Berührungs- und Zieheingabe im inneren Bereich der zweiten UI-Komponente (420) entspricht, eine Bewegungsrichtung und -entfernung der Berührungs- und
Zieheingabe berechnet und die Position der ersten UI-Komponente basierend auf der berechneten Richtung und Entfernung überträgt;
wobei, wenn sich die erste UI-Komponente einem Ende der Anzeige, das der berechneten Richtung entspricht, innerhalb einer vorbestimmten Entfernung nähert, der Prozessor ausgelegt ist, um den auf der Anzeige angezeigten Inhalt in der entgegengesetzten Richtung der berechneten Richtung zu übertragen, anstatt die erste UI-Komponente (410) zu übertragen.

2. Elektronische Vorrichtung (101) nach Anspruch 1, wobei die Position der zweiten UI-Komponente (420) als eine Position in der Nähe der Position der ersten Eingabe bestimmt wird.

3. Elektronische Vorrichtung (101) nach Anspruch 1, wobei das spezifische Bild, das in der zweiten UI-Komponente (420) angezeigt wird, einen anderen Maßstab hat als ein Bild, das in der ersten UI-Komponente (410) angezeigt wird.

4. Elektronische Vorrichtung (101) nach Anspruch 1, wobei der mindestens eine Prozessor ferner so ausgelegt ist, dass er basierend auf einer dritten Eingabe eine dritte UI-Komponente anzeigt, die ein Symbol zur Durchführung einer vorbestimmten Funktion auf der Anzeige enthält.

5. Elektronische Vorrichtung (101) nach Anspruch 1, wobei der mindestens eine Prozessor ferner so ausgelegt ist, dass er basierend auf einer vierten Eingabe mindestens eine aus der ersten und der zweiten UI-Komponente (410, 420) von der Anzeige entfernt.

6. Elektronische Vorrichtung nach Anspruch 1, wobei die Anzeige eine erste Anzeige, die einen ersten Inhalt anzeigt, und eine zweite Anzeige, die einen zweiten Inhalt anzeigt, umfasst,
wobei der mindestens eine Prozessor zu Folgendem ausgelegt ist:
als Reaktion auf die erste Eingabe, die von der zweiten Anzeige empfangen wird, Anzeigen der ersten Benutzerschnittstellenkomponente (UI-Komponente) auf der ersten Anzeige, um zumindest einen Teil des ersten Inhalts von dem ersten Inhalt zu unterscheiden, und
Anzeigen der zweiten UI-Komponente (420) auf der zweiten Anzeige.

7. Elektronische Vorrichtung nach Anspruch 6, wobei der Prozessor ferner zu Folgendem ausgelegt ist:
Speichern der Position der ersten Eingabe in einem Speicher der elektronischen Vorrichtung, und
Anzeigen mindestens einer aus der ersten UI-Komponente (410) und der zweiten UI-Komponente (420) basierend auf der gespeicherten Position.

8. Steuerungsverfahren einer elektronischen Vorrichtung mit einer Anzeige, wobei das Verfahren Folgendes umfasst:
Empfangen einer ersten Eingabe;
als Reaktion auf die erste Eingabe, Anzeigen einer ersten Benutzerschnittstellenkomponente (UI-Komponente) (410) zum Unterscheiden mindestens eines Teils eines gesamten Anzeigebereichs der Anzeige von dem gesamten Anzeigebereich sowie einer zweiten UI-Komponente (420) auf der Anzeige;
Bestimmen einer Position der auf der Anzeige angezeigten zweiten UI-Komponente (420) an einer vorbestimmten Position oder Bestimmen der Position basierend auf einer Position der ersten Eingabe, über die Informationen empfangen worden sind;
Anzeigen eines duplizierten Bildes des Bildes, das in dem inneren Bereich der ersten UI-Komponente (410) angezeigt wird, in der zweiten UI-Komponente (420) anstelle eines Originalbildes, das der zweiten UI-Komponente entspricht (420); und
wenn ein Benutzer ein in dem inneren Bereich der zweiten UI-Komponente (420) angezeigtes Symbol auswählt, Betrachten dieses Vorgangs als Auswahl des in dem inneren Bereich der ersten UI-Komponente (410) angezeigten Symbols und Durchführen einer entsprechenden Funktion,
wobei das Verfahren als Reaktion auf das Auftreten einer zweiten Eingabe, die einer Berührungsund Zieheingabe im inneren Bereich der zweiten UI-Komponente (420) entspricht, ferner Folgendes umfasst: Berechnen einer Bewegungsrichtung und -entfernung der Berührungs- und Zieheingabe, und Übertragen der Position der ersten UI-Komponente basierend auf der berechneten Richtung und Entfernung;
wobei, wenn sich die erste UI-Komponente einem Ende der Anzeige, das der berechneten Richtung entspricht, innerhalb einer vorbestimmten Entfernung nähert, das Verfahren das Übertragen des auf der Anzeige angezeigten Inhalts in der entgegengesetzten Richtung der berechneten Richtung anstelle des Übertragens der ersten UI-Komponente (410) umfasst.

9. Verfahren nach Anspruch 8, wobei, wenn die Position der zweiten UI-Komponente (420) basierend auf der Position der ersten Eingabe angezeigt wird, bestimmt wird, dass die Position der zweiten UI-Komponente (420) eine Position in der Nähe der Position der ersten Eingabe ist.

10. Computerprogramm, das Anweisungen umfasst, die, wenn das Programm von der Vorrichtung nach Anspruch 1 ausgeführt wird, die Vorrichtung veranlassen, die Schritte des Verfahrens nach Anspruch 8 auszuführen.

11. Übergangsloses computerlesbares Aufzeichnungsmedium, auf dem das Computerprogramm nach Anspruch 10 gespeichert ist.

## Revendications

1. Appareil électronique (101) comprenant :
un écran conçu pour recevoir une entrée tactile d'un utilisateur, et
au moins un processeur relié électriquement à l'écran ;
l'au moins un processeur étant conçu pour afficher sur l'écran, en réaction à une première entrée, un premier composant (410) d'interface utilisateur (UI, user interface) permettant de distinguer de la totalité d'une zone d'affichage de l'écran au moins une partie de ladite totalité de la zone d'affichage, ainsi qu'un deuxième composant d'UI (420), et
l'emplacement dudit deuxième composant d'UI (420) affiché sur l'écran étant prédéfini ou déterminé compte tenu de l'emplacement de la première entrée ;
ledit appareil électronique (101) étant conçu pour :
afficher dans le deuxième composant d'UI une image dupliquée d'une image qui est affichée dans la zone intérieure du premier composant d'UI, au lieu d'une image d'origine correspondant au deuxième composant d'UI, et
si un utilisateur sélectionne une icône affichée dans la zone intérieure du deuxième composant d'UI (420), considérer cela comme une sélection de l'icône affichée dans la zone intérieure du premier composant d'UI (410) et exécuter une fonction correspondante ;
ledit au moins un processeur étant en outre conçu, en réaction à la survenue d'une deuxième entrée correspondant à une entrée de type toucher-glisser dans la zone intérieure du deuxième composant d'UI (420), pour calculer la direction et la distance de déplacement de l'entrée de type toucher-glisser et pour transférer l'emplacement du premier composant d'UI compte tenu de la direction et de la distance calculées ;
ledit processeur étant conçu, lorsque le premier composant d'UI s'approche d'une extrémité de l'écran correspondant à la direction calculée dans les limites d'une distance prédéterminée, pour transférer le contenu affiché sur l'écran dans la direction opposée à la direction calculée plutôt que de transférer le premier composant d'UI (410).

2. Appareil électronique (101) selon la revendication 1, dans lequel l'emplacement du deuxième composant d'UI (420) est déterminé comme étant proche de l'emplacement de la première entrée.

3. Appareil électronique (101) selon la revendication 1, dans lequel l'image spécifique affichée dans le deuxième composant d'UI (420) est d'une échelle différente de celle d'une image affichée dans le premier composant d'UI (410).

4. Appareil électronique (101) selon la revendication 1, dans lequel l'au moins un processeur est en outre conçu pour afficher, compte tenu d'une troisième entrée, un troisième composant d'UI contenant une icône permettant d'exécuter une fonction prédéterminée sur l'écran.

5. Appareil électronique (101) selon la revendication 1, dans lequel l'au moins un processeur est en outre conçu pour supprimer au moins l'un des premier et deuxième composants d'UI (410, 420) de l'écran, compte tenu d'une quatrième entrée.

6. Appareil électronique selon la revendication 1, dans lequel l'écran comprend un premier écran affichant un premier contenu et un deuxième écran affichant un deuxième contenu, ledit au moins un processeur étant conçu pour :
en réaction à la première entrée reçue en provenance du deuxième affichage, afficher sur le premier écran le premier composant d'interface utilisateur (UI) permettant de distinguer du premier contenu au moins une partie dudit premier contenu, et
afficher, sur le deuxième écran, le deuxième composant d'UI (420).

7. Appareil électronique selon la revendication 6, dans lequel le processeur est en outre conçu pour :
stocker l'emplacement de la première entrée dans une mémoire de l'appareil électronique, et
afficher le premier composant d'UI (410) et/ou le deuxième composant d'UI (420) compte tenu de l'emplacement stocké.

8. Procédé de commande d'un appareil électronique comportant un écran, le procédé comprenant les opérations consistant à :
recevoir une première entrée,
afficher sur l'écran, en réaction à la première entrée, un premier composant (410) d'interface utilisateur (UI) permettant de distinguer de la totalité d'une zone d'affichage de l'écran au moins une partie de ladite totalité de la zone d'affichage, ainsi qu'un deuxième composant d'UI (420),
déterminer l'emplacement du deuxième composant d'UI (420) affiché sur l'écran, à un emplacement prédéterminé, ou l'emplacement étant déterminé compte tenu de l'emplacement de la première entrée au sujet duquel des informations ont été reçues,
afficher dans le deuxième composant d'UI (420) une image dupliquée de l'image qui est affichée dans la zone intérieure du premier composant d'UI (410), au lieu d'une image d'origine correspondant au deuxième composant d'UI (420), et
si un utilisateur sélectionne une icône affichée dans la zone intérieure du deuxième composant d'UI (420), considérer cela comme une sélection de l'icône affichée dans la zone intérieure du premier composant d'UI (410) et exécuter une fonction correspondante ;
le procédé comprenant en outre, en réaction à la survenue d'une deuxième entrée correspondant à une entrée de type toucher-glisser dans la zone intérieure du deuxième composant d'UI (420), le calcul de la direction et de la distance de déplacement de l'entrée de type toucher-glisser, et le transfert de l'emplacement du premier composant d'UI compte tenu de la direction et de la distance calculées ;
étant entendu que, lorsque le premier composant d'UI s'approche d'une extrémité de l'écran correspondant à la direction calculée dans les limites d'une distance prédéterminée, le procédé comprend le transfert du contenu affiché sur l'écran dans la direction opposée à la direction calculée plutôt que le transfert du premier composant d'UI (410).

9. Procédé selon la revendication 8, dans lequel, si l'emplacement du deuxième composant d'UI (420) est affiché compte tenu de l'emplacement de la première entrée, l'emplacement dudit deuxième composant d'UI (420) est déterminé comme étant un emplacement proche de l'emplacement de la première entrée.

10. Programme informatique comprenant des instructions qui, lorsque le programme est exécuté par l'appareil selon la revendication 1, amènent le dispositif à exécuter les étapes du procédé selon la revendication 8.

11. Support d'enregistrement non transitoire lisible par ordinateur sur lequel est enregistré le programme informatique selon la revendication 10.
